# EUROPEAN PATENT SPECIFICATION

(11) **EP 2 100 980 B1**
(45) Date of publication and mention of the grant of the patent: **03.04.2013**
(21) Application number: 07830398.9
(22) Date of filing: 23.10.2007
(51) Int. Cl.: H01M 4/80, H01M 4/88, H01M 4/66, H01M 4/74, B22F 3/11

(54) **MIXED MATERIAL WITH HIGH EXPANSION RATE FOR PRODUCING POROUS METALLIC SINTERED BODY**
MATERIALMISCHUNG MIT HOHER EXPANSIONSRATE ZUR HERSTELLUNG EINES PORÖSEN METALLISCHEN SINTERKÖRPERS
MÉLANGE DE MATIÈRES PRÉSENTANT UNE VITESSE DE DILATATION ÉLEVÉE POUR LA PRODUCTION D'UN AGGLOMÉRÉ MÉTALLIQUE POREUX

(30) Priority: 24.10.2006 JP 2006288328
(43) Date of publication of application: 16.09.2009
(73) Proprietor: Mitsubishi Materials Corporation, Tokyo 100-8117 (JP)
(72) Inventor: WADA, Masahiro, Kitamoto-shi Saitama 3640023 (JP); KANDA, Eiko, Kitamoto-shi Saitama 3640023 (JP); OHMORI, Shinichi, Okegawa-shi Saitama 3630026 (JP); SHIBUYA, Takumi, Okegawa-shi Saitama 3630026 (JP); TSUJIMOTO, Tetsuji, Kitamoto-shi, Saitama (JP)
(74) Representative: HOFFMANN EITLE
(86) International application number: PCT/JP2007/070664
(87) International publication number: WO 2008/050773

(56) References cited:
- JP-A- 7 331 302
- JP-A- 09 143 511
- JP-A- 09 149 854
- JP-A- 2004 039 516
- JP-A- 2004 043 976
- JP-A- 2006 138 005

## Description

### TECHNICAL FIELD

The present invention relates to a mixed material having a high expansion rate for producing a porous metallic sintered body.
Priority is claimed on Japanese Patent Application No. 2006-288328, filed October 24, 2006.

### BACKGROUND ART

It has been widely known that a porous metal is generally used as a raw material for producing various electrodes of fuel cells, filters for high temperature use, filters for air cleaners, electrode substrates of alkaline secondary batteries, and the like. As one of the methods for manufacturing such a porous metal, the following procedures have been adopted. A mixed material for producing a porous metallic sintered body which contains a metal powder is shaped into a thin sheet form by a doctor blade method. The resulting thin sheet-shaped article is then expanded into a spongy form in a high-humidity thermostatic vessel due to the vapor pressure of a volatile organic solvent and the foamability of a surfactant, both of the volatile organic solvent and the surfactant are serving as the foaming agents contained in the mixed material for producing a porous metallic sintered body. The resultant is then dried in a drying vessel to produce a spongy green sheet. The spongy green sheet is degreased and then sintered by letting the spongy green sheet pass through a degreasing apparatus and a sintering furnace, thereby producing a porous metal which has a continuous hole.

As the aforementioned mixed material for producing a porous metallic sintered body, a mixed material for producing a porous metallic sintered body which is formed of a mixture having the following composition is known:
0.05 to 10% by mass of a non-water-soluble hydrocarbon-based organic solvent having 5 to 8 carbon atoms;
0.5 to 20% by mass of a water-soluble resin binder; and
5 to 80% by mass of a metal powder having an average particle size within a range of 0.5 to 500 µm,
and where necessary, the mixture further contains
0.05 to 5% by mass of a surfactant; and where necessary, further contains
0.1 to 15% by mass of at least one plasticizer selected from the group consisting of a polyhydric alcohol, a fat and oil, an ether, and an ester;
and water as the balance.

The foaming agent used herein may be any agent as long as it is capable of generating a gas and forming air bubbles. As a volatile organic solvent, it is known that non-water soluble hydrocarbon-based organic solvents having 5 to 8 carbon atoms, such as pentane, neopentane, hexane, isohexane, isopeptane, benzene, octane, and toluene, can be used.
As a water-soluble resin binder, it is known that methylcellulose, hydroxypropylmethylcellulose, hydroxyethylmethylcellulose, carboxymethylcellulose ammonium, ethylcellulose, polyvinyl alcohol, or the like can be used.
As a surfactant, it is known that an anionic surfactant such as alkylbenzenesulfonates, α-olefin sulfonates, an alkyl sulfuric acid ester salt thereof, an alkyl ether sulfuric acid ester salt thereof, and alkanesulfonates; and a nonionic surfactant such as a polyethylene glycol derivative and a polyhydric alcohol derivative, can be used.
A plasticizer is used for imparting plasticity to a shaped article. As a plasticizer, it is known that a polyhydric alcohol such as ethylene glycol, polyethylene glycol, and glycerin; a fat and oil such as sardine oil, rapeseed oil, and olive oil; ethers such as petroleum ether; esters such as diethyl phthalate, di-N-butyl phthalate, diethylhexyl phthalate, dioctyl phthalate, sorbitan monooleate, sorbitan trioleate, sorbitan palmitate, and sorbitan stearate, or the like, can be used (refer to Patent Documents 1 and 2, for example).
The conventional mixed material described above for producing a porous metallic sintered body is produced by first preparing a slurry which contains the aforementioned water-soluble resin binder, metal powder, and water, and further contains, if necessary, a surfactant and/or a plasticizer, and then by adding a non-water-soluble hydrocarbon-based organic solvent having 5 to 8 carbon atoms which serves as a foaming agent to this slurry and kneading the resulting mixture. The proportion of the gas contained in the conventional mixed material for producing a porous metallic sintered body prepared by the above kneading process is equal to or less than 1% by volume, and treatments such as a vacuum degassing treatment have also usually been conducted in order to reduce the amount of air trapped due to the kneading process as much as possible.
[Patent Document 1] Japanese Patent Publication No. 3246190
[Patent Document 2] Japanese Unexamined Patent Application, First Publication No. Hei 9-118901

### DISCLOSURE OF INVENTION

### PROBLEMS TO BE SOLVED BY THE INVENTION

As described earlier, in the process of producing a porous metallic sintered body using the aforementioned conventional mixed material for producing a porous metallic sintered body, the following steps need to be conducted. That is, the mixed material for producing a porous metallic sintered body is shaped into a thin sheet form by a doctor blade method, and the resulting thin sheet-shaped article is then expanded into a spongy form in a high-humidity thermostatic vessel due to the vapor pressure of a volatile organic solvent and the foamability of a surfactant, both of the volatile organic solvent and the surfactant are serving as the foaming agents contained in the thin sheet-shaped article made of the mixed material for producing a porous metallic sintered body. However, since the conventional mixed material for producing a porous metallic sintered body has a slow expansion rate, a long time of between 20 and 180 minutes is required for completing the foaming process when expanding the thin sheet-shaped article made of the conventional mixed material for producing a porous metallic sintered body. Such a long time required for the foaming process makes the conventional mixed material for producing a porous metallic sintered body inappropriate for the mass production of porous metallic sintered bodies.

### MEANS FOR SOLVING THE PROBLEMS

Accordingly, the present inventors conducted a study in order to achieve a mixed material for producing a porous metallic sintered body which has a high expansion rate and discovered the following as a result.
(A) Expansion rates markedly increase when the mixed material for producing a porous metallic sintered body contains a gas to some extent, as compared to the cases where the mixed material for producing a porous metallic sintered body has a low gas content or contains no gas due to a vacuum degassing treatment.
(B) The type of gas contained in the mixed material for producing a porous metallic sintered body is preferably air, oxygen, nitrogen, argon, helium, carbon dioxide, hydrogen, or the like, and the amount of gas contained in the mixed material for producing a porous metallic sintered body is preferably within a range of 2 to 50% by volume (preferably within a range of 5 to 20% by volume). The above conditions markedly increase the expansion rate and shorten the time required for completing the foaming process within a range of 1 to 8 minutes, and thus the time required for producing a porous metal can be further reduced.

The present invention is made based on the above findings and refers to a matrial for producing a porous metallic sintered body according to claim 1.
A first aspect of the present invention is a mixed material for producing a porous metallic sintered body which has a high expansion rate, the mixed material containing a mixed material for producing a porous metallic sintered body (hereinafter referred to as a conventional mixed material A for producing a porous metallic sintered body) which is formed of a mixture including a composition of:
0.05 to 10% by mass of a non-water-soluble hydrocarbon-based organic solvent having 5 to 8 carbon atoms;
0.5 to 20% by mass of a water-soluble resin binder;
5 to 80% by mass of a metal powder having an average particle size within a range of 0.5 to 500 µm;
and water as the balance,
and a gas,
in which the mixed material contains the gas so that the proportion of the gas is within a range of 2 to 50% by volume while the remainder is the conventional mixed material A for producing a porous metallic sintered body.
A second aspect of the present invention is a mixed material for producing a porous metallic sintered body which has a high expansion rate, the mixed material containing a mixed material for producing a porous metallic sintered body (hereinafter referred to as a conventional mixed material B for producing a porous metallic sintered body) which is formed of a mixture including a composition of:
0.05 to 10% by mass of a non-water-soluble hydrocarbon-based organic solvent having 5 to 8 carbon atoms;
0.5 to 20% by mass of a water-soluble resin binder;
5 to 80% by mass of a metal powder having an average particle size within a range of 0.5 to 500 µm;
0.05 to 5% by mass of a surfactant;
and water as the balance,
and a gas,
in which the mixed material contains the gas so that the proportion of the gas is within a range of 2 to 50% by volume while the remainder is the conventional mixed material B for producing a porous metallic sintered body.
A third aspect of the present invention is a mixed material for producing a porous metallic sintered body which has a high expansion rate, the mixed material containing a mixed material for producing a porous metallic sintered body (hereinafter referred to as a conventional mixed material C for producing a porous metallic sintered body) which is formed of a mixture including a composition of:
0.05 to 10% by mass of a non-water-soluble hydrocarbon-based organic solvent having 5 to 8 carbon atoms;
0.5 to 20% by mass of a water-soluble resin binder;
5 to 80% by mass of a metal powder having an average particle size within a range of 0.5 to 500 µm;
0.1 to 15% by mass of at least one plasticizer selected from the group consisting of a polyhydric alcohol, a fat and oil, an ether, and an ester;
and water as the balance;
and a gas,
in which the mixed material contains the gas so that the proportion of the gas is within a range of 2 to 50% by volume while the remainder is the conventional mixed material C for producing a porous metallic sintered body.
A fourth aspect of the present invention is a mixed material for producing a porous metallic sintered body which has a high expansion rate, the mixed material containing a mixed material for producing a porous metallic sintered body (hereinafter referred to as a conventional mixed material D for producing a porous metallic sintered body) which is formed of a mixture including a composition of:
0.05 to 10% by mass of a non-water-soluble hydrocarbon-based organic solvent having 5 to 8 carbon atoms;
0.05 to 5% by mass of a surfactant;
0.5 to 20% by mass of a water-soluble resin binder;
5 to 80% by mass of a metal powder having an average particle size within a range of 0.5 to 500 µm;
0.1 to 15% by mass of at least one plasticizer selected from the group consisting of a polyhydric alcohol, a fat and oil, an ether, and an ester;
and water as the balance;
and a gas,
in which the mixed material contains the gas so that the proportion of the gas is within a range of 2 to 50% by volume while the remainder is the conventional mixed material D for producing a porous metallic sintered body.

The reason for setting the proportion of the gas included in the mixed material of the present invention for producing a porous metallic sintered body within a range of 2 to 50% by volume, with respect to the total volume of the mixed material for producing a porous metallic sintered body, is that a gas content of less than 2% by volume cannot achieve a satisfactory effect for shortening the foaming time, whereas a gas content of more than 50% by volume results in the formation of too many air bubbles, which makes it impossible to maintain the foaming state and also makes it difficult to control the coating process.

In order to produce the mixed material of the present invention for producing a porous metallic sintered body, a slurry is first prepared which contains the aforementioned water-soluble resin binder, metal powder, and water, and further contains, if necessary, a surfactant and/or a plasticizer. The mixed material of the present invention for producing a porous metallic sintered body can be produced by adding the aforementioned non-water-soluble hydrocarbon-based organic solvent having 5 to 8 carbon atoms to the obtained slurry, and stirring the resulting mixture in which the aforementioned non-water-soluble hydrocarbon-based organic solvent having 5 to 8 carbon atoms is added to the slurry with a stirring device such as a mixer, and at the same time, supplying a gas through a minute hole provided in a pipe so that the gas generates foam. In addition, the mixed material of the present invention for producing a porous metallic sintered body can also be produced by first mixing a gas with the obtained slurry described earlier and then adding a non-water-soluble hydrocarbon-based organic solvent having 5 to 8 carbon atoms thereto followed by mixing due to a stirring process.
The type of gas used during this process is preferably air, oxygen, nitrogen, argon, helium, carbon dioxide, hydrogen, or the like.
The metal powder contained in the mixed material of the present invention for producing a porous metallic sintered body may be of any metal and is not particularly limited. However, it is preferably a metal powder of Ag, Ni, Ti, Cu, stainless steel, or the like which has relatively excellent corrosion resistance.
In addition, any additive component may be added in order to improve the properties or formability of the slurry. For example, an antiseptic may be added in order to improve the storage stability of the slurry, or a polymer-based compound may be added as a binder assistant in order to improve the strength of the shaped article.

### EFFECTS OF THE INVENTION

By using the mixed material of the present invention for producing a porous metallic sintered body, since it foams in an even shorter time period as compared to conventional mixed materials for producing a porous metallic sintered body, it is possible to produce a porous metal having minute pores with uniform size within an even shorter time period.

### BEST MODE FOR CARRYING OUT THE INVENTION

As a metal powder, an Ag powder having an average particle size of 10 µm, a Ti powder having an average particle size of 10 µm, a Ni powder having an average particle size of 10 µm and an SUS 316 powder having an average particle size of 12 µm were prepared.
Moreover, hexane as a foaming agent, methylcellulose and hydroxypropylmethylcellulose as water-soluble resin binders, sodium dodecylbenzenesulfonate as a surfactant, and glycerin as a plasticizer were prepared, and water was also prepared.

### [Example 1]

To a slurry obtained by mixing the Ag powder having an average particle size of 10 µm, hydroxypropylmethylcellulose serving as a water-soluble resin binder, and water which were prepared earlier, hexane as a non-water-soluble hydrocarbon-based organic solvent having 5 to 8 carbon atoms (foaming agent) was further added, thereby preparing a mixture. By stirring this mixture using a mixer, a conventional mixed material A for producing a porous metallic sintered body was produced which was formed of 60% by mass of Ag powder having an average particle size of 10 µm, 1.8% by mass of hexane as a non-water-soluble hydrocarbon-based organic solvent having 5 to 8 carbon atoms (foaming agent), 6.5% by mass of hydroxypropylmethylcellulose as a water-soluble resin binder, and water as the balance.

To a slurry obtained by mixing the Ag powder having an average particle size of 10 µm, hydroxypropylmethylcellulose serving as a water-soluble resin binder, and water which were prepared earlier, hexane as a non-water-soluble hydrocarbon-based organic solvent having 5 to 8 carbon atoms (foaming agent) was further added, thereby preparing a mixture. While stirring this mixture using a mixer, air was supplied to the mixture from a pipe provided with 50 minute holes having a diameter of 0.5 mm. By continuing the stirring process while adjusting the amount of air supplied, mixed materials of Present Invention 1 to 5 for producing a porous metallic sintered body and Comparative Mixed Materials 1 and 2 for producing a porous metallic sintered body were produced, all of which were formed of a slurry composed of 60% by mass of Ag powder having an average particle size of 10 µm, 1.8% by mass of hexane as a non-water-soluble hydrocarbon-based organic solvent having 5 to 8 carbon atoms (foaming agent), 6.5% by mass of hydroxypropylmethylcellulose as a water-soluble resin binder, and water as the balance, as well as air, which was introduced to the slurry so that the respective mixed materials each contained the amount of air shown in Table 1 while the remainder was the conventional mixed material A for producing a porous metallic sintered body.

These mixed materials for producing a porous metallic sintered body, that is, the conventional mixed material A for producing a porous metallic sintered body, the comparative mixed materials 1 and 2 for producing a porous metallic sintered body, and the mixed materials of present inventions 1 to 5 for producing a porous metallic sintered body were respectively applied on one entire surface of a polyethylene terephthalate (PET) resin sheet having dimensions of 200 mm (longitudinal) × 200 mm (transverse) × 1 mm (thickness) so that the thickness of the resulting coating film was 0.3 mm. This coating film was retained under the conditions of a humidity of 90% and a temperature of 45°C, and the time required for the coating film to expand so as to achieve a thickness of 1.2 mm was measured. The results are shown in Table 1.

**[Table 1]**

| Mixed material for producing a porous metallic sintered body | | Constitution of mixed material of the present invention for producing a porous metallic sintered body (% bv volume) | | Time required for coating film with a thickness of 0.3 mm to expand so as to achieve a thickness of 1.2 mm (min) | Note |
|---|---|---|---|---|---|
| | | Air content | Conventional mixed material A for producing a porous metallic sintered body | | |
| Present invention | 1 | 2.1 | Remainder | 8 | - |
| | 2 | 5.0 | Remainder | 5 | - |
| | 3 | 20.1 | Remainder | 3 | - |
| | 4 | 35.0 | Remainder | 2 | - |
| | 5 | 49.8 | Remainder | 2 | - |
| Comparative | 1 | 1.3* | Remainder | 24 | - |
| | 2 | 51.6* | Remainder | 2 | Difficult coating control |
| Conventional 1 | | - | 100 | 61 | - |

From the results shown in Table 1, it is apparent that the time required for the coating films obtained by using the mixed materials of present inventions 1 to 5 for producing a porous metallic sintered body to expand so as to achieve a thickness of 1.2 mm was shortened to a great extent, as compared to the time required for the coating film obtained by using only the conventional mixed material A for producing a porous metallic sintered body to expand so as to achieve a thickness of 1.2 mm. However, it took a somewhat longer time for the coating film obtained by using the comparative mixed material 1 for producing a porous metallic sintered body to expand so as to achieve a thickness of 1.2 mm. On the other hand, when the comparative mixed material 2 for producing a porous metallic sintered body, which had an air content of more than 50% by volume, was used, it was difficult to control the coating process due to the large extent of unevenness formed on the coating film surface, and thus the use was not preferable.

### [Example 2]

To a slurry obtained by mixing the Ti powder having an average particle size of 10 µm, methylcellulose serving as a water-soluble resin binder, sodium dodecylbenzenesulfonate serving as a surfactant, and water which were prepared earlier, hexane as a non-water-soluble hydrocarbon-based organic solvent having 5 to 8 carbon atoms (foaming agent) was further added, thereby preparing a mixture. By stirring this mixture using a mixer, a conventional mixed material B for producing a porous metallic sintered body was produced which was formed of 60% by mass of Ag powder having an average particle size of 10 µm 1.8% by mass of hexane as a non-water-soluble hydrocarbon-based organic solvent having 5 to 8 carbon atoms (foaming agent), 6.5% by mass of methylcellulose as a water-soluble resin binder, 2.0% by mass of sodium dodecylbenzenesulfonate as a surfactant, and water as the balance.

To a slurry obtained by mixing the Ti powder having an average particle size of 10 µm methylcellulose serving as a water-soluble resin binder, sodium dodecylbenzenesulfonate serving as a surfactant, and water which were prepared earlier, hexane as a non-water-soluble hydrocarbon-based organic solvent having 5 to 8 carbon atoms (foaming agent) was further added, thereby preparing a mixture. While stirring this mixture using a mixer, air was supplied to the mixture from a pipe provided with 50 minute holes having a diameter of 0.5 mm. By continuing the stirring process while adjusting the amount of air supplied, mixed materials of the present inventions 6 to 10 for producing a porous metallic sintered body and comparative mixed materials 3 and 4 for producing a porous metallic sintered body were produced, all of which were formed of a slurry composed of 60% by mass of Ti powder having an average particle size of 10 µm, 1.8% by mass of hexane as a non-water-soluble hydrocarbon-based organic solvent having 5 to 8 carbon atoms (foaming agent), 6.5% by mass of methylcellulose as a water-soluble resin binder, and water as the balance, as well as air, which was introduced to the slurry so that the respective mixed materials each contained the amount of air shown in Table 2 while the remainder was the conventional mixed material B for producing a porous metallic sintered body.

These mixed materials for producing a porous metallic sintered body, that is, the conventional mixed material B for producing a porous metallic sintered body, the comparative mixed materials 3 and 4 for producing a porous metallic sintered body, and the mixed materials of present inventions 6 to 10 for producing a porous metallic sintered body were respectively applied on a surface of the PET resin sheet so that the thickness of the resulting coating film was 0.3 mm. This coating film was retained under the conditions of a humidity of 90% and a temperature of 45°C, and the time required for the coating film to expand so as to achieve a thickness of 1.2 mm was measured. The results are shown in Table 2.

**[Table 2]**

| Mixed material for producing a porous metallic sintered body | | Constitution of mixed material of the present invention for producing a porous metallic sintered body (% by volume) | | Time required for coating film with a thickness of 0.3 mm to expand so as to achieve a thickness of 1.2 mm (min) | Note |
|---|---|---|---|---|---|
| | | Air content | Conventional mixed material B for producing a porous metallic sintered body | | |
| Present invention | 6 | 2.2 | Remainder | 7 | - |
| | 7 | 5.1 | Remainder | 5 | - |
| | 8 | 20:1 | Remainder | 2 | - |
| | 9 | 35.1 | Remainder | 1 | - |
| | 10 | 48.9 | Remainder | 1 | - |
| Comparative | 3 | 1.3* | Remainder | 14 | - |
| | 4 | 51.6* | Remainder | 1 | Difficult coating control |
| Conventional 2 | | - | 100 | 20 | - |

From the results shown in Table 2, it is apparent that the time required for the coating films obtained by using the mixed materials of present inventions 6 to 10 for producing a porous metallic sintered body to expand so as to achieve a thickness of 1.2 mm was shortened to a great extent, as compared to the time required for the coating film obtained by using only the conventional mixed material B for producing a porous metallic sintered body to expand so as to achieve a thickness of 1.2 mm.
However, it took a somewhat longer time for the coating film obtained by using the comparative mixed material 3 for producing a porous metallic sintered body to expand so as to achieve a thickness of 1.2 mm. On the other hand, when the comparative mixed material 4 for producing a porous metallic sintered body, which had an air content of more than 50% by volume, was used, it was difficult to control the coating process due to the large extent of unevenness formed on the coating film surface, and thus the use was not preferable.

### [Example 3]

To a slurry obtained by mixing the Ni powder having an average particle size of 10 µm, hydroxypropylmethylcellulose serving as a water-soluble resin binder, glycerin serving as a plasticizer, and water which were prepared earlier, hexane as a non-water-soluble hydrocarbon-based organic solvent having 5 to 8 carbon atoms (foaming agent) was further added, thereby preparing a mixture. By stirring this mixture using a mixer, a conventional mixed material C for producing a porous metallic sintered body was produced which was formed of 60% by mass of Ni powder having an average particle size of 10 µm, 1.8% by mass of hexane as a non-water-soluble hydrocarbon-based organic solvent having 5 to 8 carbon atoms (foaming agent), 6.5% by mass of hydroxypropylmethylcellulose as a water-soluble resin binder, 2.5% by mass of glycerin as a plasticizer, and water as the balance.

Further, to a slurry obtained by mixing the Ni powder having an average particle size of 10 µm, hydroxypropylmethylcellulose serving as a water-soluble resin binder, glycerin serving as a plasticizer, and water which were prepared earlier, hexane as a non-water-soluble hydrocarbon-based organic solvent having 5 to 8 carbon atoms (foaming agent) was further added, thereby preparing a mixture. While stirring this mixture using a mixer, air was supplied to the mixture from a pipe provided with 50 minute holes having a diameter of 0.5 mm. By continuing the stirring process while adjusting the amount of air supplied, the mixed materials of present inventions 11 to 15 for producing a porous metallic sintered body and comparative mixed materials 5 and 6 for producing a porous metallic sintered body were produced, all of which were formed of a slurry composed of 60% by mass ofAg powder having an average particle size of 10 µm 1.8% by mass of hexane as a non-water-soluble hydrocarbon-based organic solvent having 5 to 8 carbon atoms (foaming agent), 6.5% by mass of hydroxypropylmethylcellulose as a water-soluble resin binder, 2.5% by mass of glycerin as a plasticizer, and water as the balance, as well as air, which was introduced to the slurry so that the respective mixed materials each contained the amount of air shown in Table 3 while the remainder was the conventional mixed material C for producing a porous metallic sintered body.

These mixed materials for producing a porous metallic sintered body, that is, the conventional mixed material C for producing a porous metallic sintered body, the comparative mixed materials 5 and 6 for producing a porous metallic sintered body, and the mixed materials of present inventions 11 to 15 for producing a porous metallic sintered body were respectively applied on a surface of the PET resin sheet so that the thickness of the resulting coating film was 0.3 mm. This coating film was retained under the conditions of a humidity of 90% and a temperature of 45°C, and the time required for the coating film to expand so as to achieve a thickness of 1.2 mm was measured. The results are shown in Table 3.

**[Table 3]**

| Mixed material for producing a porous metallic sintered body | | Constitution of mixed material of the present invention for producing a porous metallic sintered body (% bv volume) | | Time required for coating film with a thickness of 0.3 mm to expand so as to achieve a thickness of 1.2 mm (min) | Note |
|---|---|---|---|---|---|
| | | Air content | Conventional mixed material C for producing a porous metallic sintered body | | |
| Present invention | 11 | 2.0 | Remainder | 8 | - |
| | 12 | 5.2 | Remainder | 4 | - |
| | 13 | 20.1 | Remainder | 3 | - |
| | 14 | 34.9 | Remainder | 3 | - |
| | 15 | 47.9 | Remainder | 3 | - |
| Comparative | 5 | 1.3* | Remainder | 31 | - |
| | 6 | 51.6* | Remainder | 3 | Difficult coating control |
| Conventional 3 | | - | Remainder | 85 | - |

From the results shown in Table 3, it is apparent that the time required for the coating films obtained by using the mixed materials of present inventions 11 to 15 for producing a porous metallic sintered body to expand so as to achieve a thickness of 1.2 mm was shortened to a great extent, as compared to the time required for the coating film obtained by using only the conventional mixed material C for producing a porous metallic sintered body to expand so as to achieve a thickness of 1.2 mm. However, it took a somewhat longer time for the coating film obtained by using the comparative mixed material 5 for producing a porous metallic sintered body to expand so as to achieve a thickness of 1.2 mm. On the other hand, when the comparative mixed material 6 for producing a porous metallic sintered body, which had an air content of more than 50% by volume was used, it was difficult to control the coating process due to the large extent of unevenness formed on the coating film surface, and thus the use was not preferable.

### [Example 4]

To a slurry obtained by mixing the SUS 316 powder having an average particle size of 10 µm, methylcellulose serving as a water-soluble resin binder, sodium dodecylbenzenesulfonate serving as a surfactant, glycerin serving as a plasticizer, and water which were prepared earlier, hexane as a non-water-soluble hydrocarbon-based organic solvent having 5 to 8 carbon atoms (foaming agent) was further added, thereby preparing a mixture. By stirring this mixture using a mixer, a conventional mixed material D for producing a porous metallic sintered body was produced which was formed of 60% by mass of Ag powder having an average particle size of 10 µm, 1.8% by mass of hexane as a non-water-soluble hydrocarbon-based organic solvent having 5 to 8 carbon atoms (foaming agent), 6.5% by mass of methylcellulose as a water-soluble resin binder, 2.0% by mass of sodium dodecylbenzenesulfonate as a surfactant, 2.5% by mass of glycerin as a plasticizer, and water as the balance.

Further, to a slurry obtained by mixing the SUS 316 powder having an average particle size of 10 µm methylcellulose serving as a water-soluble resin binder, sodium dodecylbenzenesulfonate serving as a surfactant, glycerin serving as a plasticizer, and water which were prepared earlier, hexane as a non-water-soluble hydrocarbon-based organic solvent having 5 to 8 carbon atoms (foaming agent) was further added, thereby preparing a mixture. While stirring this mixture using a mixer, air was supplied to the mixture from a pipe provided with 50 minute holes having a diameter of 0.5 mm. By continuing the stirring process while adjusting the amount of air supplied, mixed materials of present inventions 16 to 20 for producing a porous metallic sintered body and comparative mixed materials 7 and 8 for producing a porous metallic sintered body were produced, all of which were formed of a slurry composed of 60% by mass of SUS 316 powder having an average particle size of 10 µm 1.8% by mass of hexane as a non-water-soluble hydrocarbon-based organic solvent having 5 to 8 carbon atoms (foaming agent), 6.5% by mass of methylcellulose as a water-soluble resin binder, 2.5% by mass of glycerin as a plasticizer, and water as the balance, as well as air, which was introduced to the slurry so that the respective mixed materials each contained the amount of air shown in Table 4 while the remainder was the conventional mixed material D for producing a porous metallic sintered body.

These mixed materials for producing a porous metallic sintered body, that is, the conventional mixed material D for producing a porous metallic sintered body, the comparative mixed materials 7 and 8 for producing a porous metallic sintered body, and the mixed materials of present inventions 16 to 20 for producing a porous metallic sintered body were respectively applied on a surface of the PET resin sheet so that the thickness of the resulting coating film was 0.3 mm. This coating film was retained under the conditions of a humidity of 90% and a temperature of 45°C, and the time required for the coating film to expand so as to achieve a thickness of 1.2 mm was measured. The results are shown in Table 4.

**[Table 4]**

| Mixed material for producing a porous metallic sintered body | | Constitution of mixed material of the present invention for producing a porous metallic sintered body (% by volume) | | Time required for coating film with a thickness of 0.3 mm to expand so as to achieve a thickness of 1.2 mm (min) | Note |
|---|---|---|---|---|---|
| | | Air content | Conventional mixed material D for producing a porous metallic sintered body | | |
| Present invention | 16 | 2.5 | Remainder | 7 | - |
| | 17 | 5.0 | Remainder | 5 | - |
| | 18 | 19.9 | Remainder | 3 | - |
| | 19 | 35.0 | Remainder | 2 | - |
| | 20 | 49.7 | Remainder | 1 | - |
| Comparative | 7 | 1.1 * | Remainder | 18 | - |
| | 8 | 51.0* | Remainder | 1 | Difficult coating control |
| Conventional 4 | | - | 100 | 27 | - |

From the results shown in Table 4, it is apparent that the time required for the coating films obtained by using the mixed materials of present inventions 16 to 20 for producing a porous metallic sintered body to expand so as to achieve a thickness of 1.2 mm was shortened to a great extent, as compared to the time required for the coating film obtained by using only the conventional mixed material D for producing a porous metallic sintered body to expand so as to achieve a thickness of 1.2 mm. However, it took a somewhat longer time for the coating film obtained by using the comparative mixed material 7 for producing a porous metallic sintered body to expand so as to achieve a thickness of 1.2 mm. On the other hand, when the comparative mixed material 8 for producing a porous metallic sintered body, which had an air content of more than 50% by volume was used, it was difficult to control the coating process due to the large extent of unevenness formed on the coating film surface, and thus the use was not preferable.

### INDUSTRIAL APPLICABILITY

By using the mixed materials of the present invention for producing a porous metallic sintered body, since they foam in an even shorter time period as compared to the conventional mixed materials for producing a porous metallic sintered body, it is possible to produce a porous metal having minute pores with uniform size within an even shorter time period. Therefore, the present invention is highly useful industrially.

## Claims

1. A mixed material for producing a porous metallic sintered body which has a high expansion rate, the mixed material comprising:
a mixed material for producing a porous metallic sintered body (hereinafter referred to as a conventional mixed material A for producing a porous metallic sintered body) which is formed of a mixture including
0.05 to 10% by mass of a non-water-soluble hydrocarbon-based organic solvent having 5 to 8 carbon atoms, selected from the group consisting of pentane, neopentane, hexane, isohexane, isopeptane, benzene, octane, and toluene,
0.5 to 20% by mass of a water-soluble resin binder,
5 to 80% by mass of a metal powder having an average particle size within a range of 0.5 to 500 µm and
water as a balance; and
a gas, selected from the group consisting of air, oxygen, nitrogen, argon, helium, carbon dioxide, hydrogen,
**characterized in that** the mixed material contains the gas so that a proportion of the gas is within a range of 2 to 50% by volume while the remainder is the conventional mixed material A for producing a porous metallic sintered body.

2. A mixed material according Claim 1,
wherein conventional mixed material A further comprises 0.05 to 5% by mass of a surfactant.

3. A mixed material according Claim 1 or 2,
wherein conventional mixed material A further comprises 0.1 to 15% by mass of at least one plasticizer selected from the group consisting of a polyhydric alcohol, a fat and oil, an ether, and an ester.

4. A mixed material according to any one of Claims 1 to 3, wherein the water-soluble resin binder is at least one selected from a group consisting of methylcellulose, hydroxypropylmethylcellulose, hydroxyethylmethylcellulose, carboxymethylcellulose ammonium, ethylcellulose, and polyvinyl alcohol.

5. A mixed material according to any one of Claims 1 to 4, wherein the metal powder includes at least one metal selected from a group consisting of Ag, Ni, Ti, Cu, and stainless steel.

6. A mixed material according to Claim 2, wherein the surfactant is at least one selected from a group consisting of an anionic surfactant and a nonionic surfactant.

7. A mixed material according to Claim 2 or 6, wherein the surfactant is at least one selected from a group consisting of alkylbenzenesulfonates, α-olefin sulfonates, an alkyl sulfuric acid ester salt thereof, an alkyl ether sulfuric acid ester salt thereof, alkanesulfonates, a polyethylene glycol derivative and a polyhydric alcohol derivative.

8. A mixed material according to Claim 3, wherein the plasticizer is at least one selected from a group consisting of ethylene glycol, polyethylene glycol, glycerin, sardine oil, rapeseed oil, olive oil, petroleum ether, diethyl phthalate, di-N-butyl phthalate, diethylhexyl phthalate, dioctyl phthalate, sorbitan monooleate, sorbitan trioleate, sorbitan palmitate, and sorbitan stearate.

## Patentansprüche

1. Materialgemisch zur Herstellung eines porösen metallischen Sinterkörpers mit hoher Expansionsrate, wobei das Materialgemisch umfasst:
ein Materialgemisch zur Herstellung eines porösen metallischen Sinterkörpers (nachstehend als herkömmliches Materialgemisch (A) zur Herstellung eines porösen metallischen Sinterkörpers bezeichnet), das aus einer Mischung gebildet wird, die
0,05 bis 10 Masse-% eines wasserunlöslichen Kohlenwasserstoff-basierten organischen Lösungsmittels mit 5 bis 8 Kohlenstoffatomen, ausgewählt aus der Gruppe bestehend aus Pentan, Neopentan, Hexan, Isohexan, Isopeptane, Benzol, Octan und Toluol,
0,5 bis 20 Masse-% eines wasserlöslichen Harzbindemittels,
5 bis 80 Masse-% eines Metallpulvers mit einer durchschnittlichen Teilchengrösse im Bereich von 0,5 bis 500 µm, und
Wasser als Rest; und
ein Gas, ausgewählt aus der Gruppe bestehend aus Luft, Sauerstoff, Stickstoff, Argon, Helium, Kohlenstoffdioxid, Wasserstoff,
einschliesst,
**dadurch gekennzeichnet, dass** das Materialgemisch das Gas in einem solchen Anteil enthält, dass das Gas im Bereich von 2 bis 50 Vol.% liegt, während der Rest das herkömmliche Materialgemisch (A) zur Herstellung eines porösen metallischen Sinterkörpers ist.

2. Materialgemisch gemäss Anspruch 1, wobei das herkömmliche Materialgemisch (A) ferner 0,05 bis 5 Masse-% eines Tensids umfasst.

3. Materialgemisch gemäss Anspruch 1 oder 2, wobei das herkömmliche Materialgemisch (A) ferner 0,1 bis 15 Masse-% mindestens eines Weichmachers, ausgewählt aus der Gruppe bestehend aus einem mehrwertigen Alkohol, einem Fett und Öl, einem Ether und einem Ester, umfasst.

4. Materialgemisch gemäss irgendeinem der Ansprüche 1 bis 3, wobei das wasserlösliche Harzbindemittel mindestens eines, ausgewählt aus der Gruppe bestehend aus Methylcellulose, Hydroxypropylmethylcellulose, Hydroxyethylmethylcellulose, Carboxymethylcelluloseammonium, Ethylcellulose und Polyvinylalkohol, ist.

5. Materialgemisch gemäss irgendeinem der Ansprüche 1 bis 4, wobei das Metallpulver mindestens ein Metall, ausgewählt aus der Gruppe bestehend aus Ag, Ni, Ti, Cu und rostfreiem Stahl, einschliesst.

6. Materialgemisch gemäss Anspruch 2, wobei das Tensid mindestens eines, ausgewählt aus der Gruppe bestehend aus einem anionischen Tensid und einem nichtionischen Tensid, ist.

7. Materialgemisch gemäss Anspruch 2 oder 6, wobei das Tensid mindestens eines, ausgewählt aus der Gruppe bestehend aus Alkylbenzolsulfonaten, α-Olefinsulfonaten, einem Alkylschwefelsäureestersalz davon, einem Alkyletherschwefelsäureestersalz davon, Alkansulfonaten, einem Polyethylenglykolderivat und einem mehrwertigen Alkoholderivat, ist.

8. Materialgemisch gemäss Anspruch 3, wobei der Weichmacher mindestens einer, ausgewählt aus der Gruppe bestehend aus Ethylenglykol, Polyethylenglykol, Glycerin, Sardinenöl, Rapssamenöl, Olivenöl, Petroleumether, Diethylphthalat, Di-N-butylphthalat, Diethylhexylphthalat, Dioctylphthalat, Sorbitanmonooleat, Sorbitantrioleat, Sorbitanpalmitat und Sorbitanstearat, ist.

## Revendications

1. Matériau mélangé de production d'un corps fritté métallique poreux ayant un taux élevé d'expansion, le matériau mélangé comprenant :
un matériau mélangé de production d'un corps fritté métallique poreux (ci-après désigné par matériau mélangé conventionnel A de production d'un corps fritté métallique poreux) qui est formé d'un mélange comportant
0,05 à 10% en masse d'un solvant organique à base d'hydrocarbure non-soluble dans l'eau ayant 5 à 8 atomes de carbone, choisis dans le groupe constitué de pentane, néopentane, hexane, isohexane, isopeptane, benzène, octane, toluène,
0,5 à 20% en masse d'un liant de résine soluble dans l'eau,
5 à 80% en masse d'une poudre métallique ayant une taille moyenne des particules dans une plage de 0,5 à 500 µm, et
de l'eau comme reste ; et
un gaz, choisi dans le groupe constitué d'air, d'oxygène, d'azote, d'argon, d'hélium, de dioxyde de carbone, d'hydrogène,
**caractérisé en ce que** le matériau mélangé contient le gaz de telle sorte qu'une proportion du gaz soit dans une plage de 2 à 50% en volume, le reste étant le matériau mélangé conventionnel A de production d'un corps fritté métallique poreux.

2. Matériau mélangé selon la revendication 1,
dans lequel le matériau mélangé conventionnel A comprend en outre 0,05 à 5% en masse d'un agent tensioactif.

3. Matériau mélangé selon la revendication selon 1 ou 2,
dans lequel le matériau mélangé conventionnel A comprend en outre de 0,1 à 15% en masse d'au moins un plastifiant choisi dans le groupe constitué de polyol, graisse et huile, éther, et ester.

4. Matériau mélangé selon l'une quelconque des revendications 1 à 3, dans lequel le liant de résine soluble dans l'eau est au moins un élément choisi dans le groupe constitué de méthylcellulose, hydroxypropylméthylcellulose, hydroxyéthylméthylcellulose, carboxyméthylcellulose d'ammonium, éthylcellulose, et alcool polyvinylique.

5. Matériau mélangé selon l'une quelconque des revendications 1 à 4, dans lequel la poudre métallique comporte au moins un métal choisi dans un groupe constitué de Ag, Ni, Ti, Cu, et acier inoxydable.

6. Matériau mélangé selon la revendication 2, dans lequel l'agent tensioactif est au moins un élément choisi dans un groupe constitué d'un agent tensioactif anionique et d'un agent tensioactif non-ionique.

7. Matériau mélangé selon la revendication 2 ou 6, dans lequel l'agent tensioactif est au moins un élément choisi dans un groupe constitué d'alkylbenzènesulfonates, α-oléfine sulfonates, de leur sel d'ester d'acide alkyl sulfurique, de leur sel d'ester d'acide alkyléther sulfurique, d'alcanesulfonates, d'un dérivé de polyéthylène glycol et d'un dérivé d'alcool polyhydrique.

8. Matériau mélangé selon la revendication 3, dans lequel le plastifiant est au moins un élément choisi dans un groupe constitué d'éthylène glycol, polyéthylène glycol, glycérine, huile de sardine, huile de colza, huile d'olive, éther de pétrole, phtalate de diéthyle, phtalate de di-N-butyle, phtalate de diéthylhexyle, phtalate de dioctyle, monooléate de sorbitane, trioléate de sorbitane, palmitate de sorbitane, et stéarate de sorbitane.
